# EUROPEAN PATENT APPLICATION

(11) **EP 1 310 954 A2**
(43) Date of publication of application: **14.05.2003**
(21) Application number: 02257517.9
(22) Date of filing: 30.10.2002
(51) Int. Cl.: G11B 11/08, G11B 11/12, G11B 13/00, G11B 9/00

(54) **Method and system for storing and retrieving data**

(30) Priority: 30.10.2001 US 984378
(71) Applicant: Hewlett-Packard Company, Palo Alto, CA 94304 (US)
(72) Inventor: Gibson, Gary A., Palo Alto, CA 94301 (US)
(74) Representative: Jehan, Robert

(57) **Abstract**

An ultra-high-density data storage device that includes nanometer-scaled storage areas (130, 140) written to and read from with a localized primary energy source (120). Writing to the storage areas (130, 140) can be performed by supplying additional energy to the storage areas (130, 140) via a less localized secondary energy source (50, 60, 70). Also disclosed is a method of using the ultra-high-density data storage device to store and retrieve data.

## Description

This application is related to U.S. Patent Application entitled "AFM VERSION OF DIODE- AND CATHODOCONDUCTIVITY- AND CATHODOLUMINESCENCE-BASED DATA STORAGE MEDIA", Application No. 09/726,621 filed December 1, 2000, to U.S. Patent Application entitled "METHODS FOR CONDUCTING CURRENT BETWEEN A SCANNED-PROBE AND STORAGE MEDIUM", Application No. 09/783,008 filed February 15, 2001, and to European Patent Application No. (RJ/N12592) filed concurrently herewith

The present invention relates to a method of and apparatus for storing and retrieving data and to a data storage device capable of storing, reading and writing data to data storage areas of nanometer dimensions.

Recently, scientists have been developing alternative ultra-high-density data storage devices and techniques useful for operating ultra-high-density data storage devices. These devices and techniques store data bits within storage areas sized on the nanometer scale and possess advantages over conventional data storage devices. Among these advantages are quicker access to the data bits, a lower cost per bit and enablement of the manufacturing of smaller electronic devices.

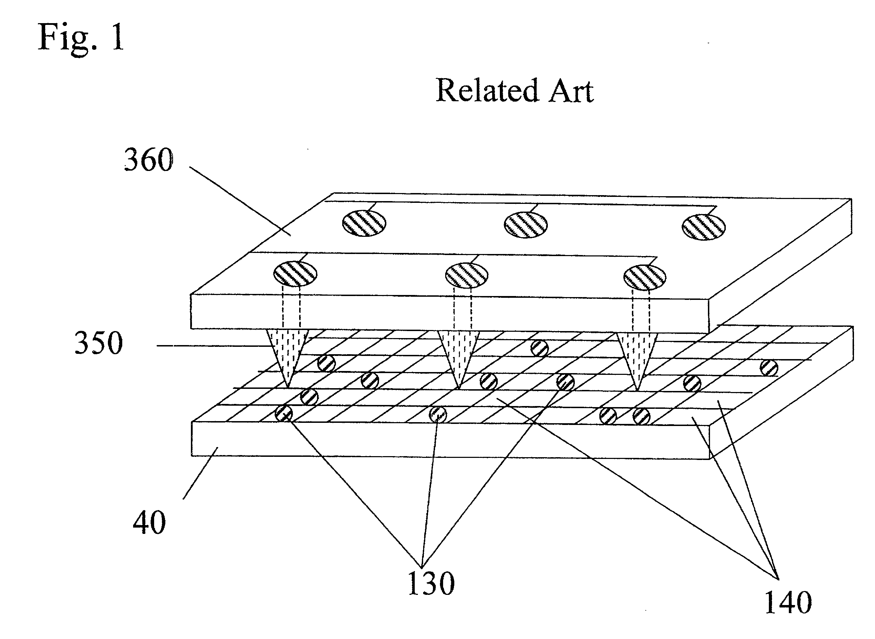

Fig. 1 illustrates an ultra-high-density data storage device configuration according to the related art that includes a storage medium 40. The storage medium 40 is separated into many storage areas (illustrated as squares on the storage medium 40), each capable of storing one data bit. Two types of storage areas, unmodified regions 140 (that typically store data bits representing the value "0") and modified regions 130 (that typically store data bits representing the value "1"), are illustrated in Fig. 1. Typical periodicities between any two storage areas range between 1 and 100 nanometers.

Fig. 1 also shows, conceptually, emitters 350 positioned above the storage medium 40, and a gap between the emitters 350 and the storage medium 40. The emitters 350 are capable of emitting electron beams and are arranged on a movable emitter array support 360 (also known as a "micromover") that can hold hundreds or even thousands of emitters 350 in a parallel configuration. The emitter array support 360 provides electrical connections to each emitter 350, as illustrated conceptually by the wires on the top surface of emitter array support 360.

The emitter array support 360 can move the emitters 350 with respect to the storage medium 40. This allows each emitter 350 to scan across many storage areas on the storage medium 40. The storage medium 40 can also be placed on a platform that moves the storage medium 40 relative to the emitter array support 360. The platform can be actuated electrostatically, magnetically or by the use of piezoelectrics. Dependent upon the range of motion between the emitter array support 360 relative to the storage medium 40, each emitter 350 can have access to data bits in tens of thousands or even millions of data storage areas.

Some specific embodiments of the ultra-high-density data storage device discussed above are disclosed in U.S. Patent No. 5,557,596 to Gibson et al. (Gibson '596). The devices disclosed in the Gibson '596 patent include the storage medium 40, modified regions 130, unmodified regions 140, emitters 350 and emitter array support 360 illustrated in Fig. 1.

The storage medium 40, according to the Gibson '596 patent, can be implemented in several forms. For example, the storage medium 40 can be based on diodes such as p-n junctions or Schottky barriers. Further, the storage medium 40 can include combinations of a photodiode and a fluorescent layer such as zinc oxide (for a write-once device) or a phase-change layer that exhibits detectable changes in cathodoluminescence upon a phase change (for a re-writeable device). The photodiode configurations rely on monitoring changes in the cathodoluminescence of the storage medium 40 to detect the state of a written bit. The storage medium 40 can also be held at a different potential than the emitters 350 in order to accelerate or decelerate electrons emanating from the emitters 350.

The emitters 350 disclosed in the Gibson '596 patent are electron-emitting field emitters, are made by semiconductor micro-fabrication techniques and emit very narrow electron beams. Silicon field emitters (e.g., silicon Spindt emitters or silicon flat emitters) can be used, as can other Spindt and flat emitters. Non-silicon Spindt emitters typically include molybdenum cone emitters, corresponding gates and a pre-selected potential difference applied between each molybdenum cone emitter and its corresponding gate.

As the gap between the emitters 350 and the storage medium 40 widens, the spot size of the electron beams also tends to widen. However, the emitters 350 must produce electron beams narrow enough to interact with a single storage area. Therefore, it is sometimes necessary to incorporate electron optics, often requiring more complicated and expensive manufacturing techniques to focus the electron beams. The Gibson '596 patent also discloses electrostatic deflectors that sometimes are used to deflect the electron beams coming from the emitters 350.

According to the Gibson '596 patent, the emitter array support 360 can include a 100x100 emitter 350 array with an emitter 350 pitch of 50 micrometers in both the X- and Y- directions. The emitter array support 360, like the emitters 350, can be manufactured by standard, cost-effective, semiconductor micro-fabrication techniques. Further, since the range of movement of the emitter array support 360 can be as much as 50 micrometers, each emitter 350 can be positioned over any of tens of thousands to hundreds of millions of storage areas. Also, the emitter array support 360 can address all of the emitters 350 simultaneously or can address them in a multiplex manner.

During operation, the emitters 350 are scanned over many storage areas by the emitter array support 360 and, once over a desired storage area, an emitter 350 can be operated to bombard the storage area with either a high-power-density electron beam or a low-power-density electron beam.

The Gibson '596 patent discloses devices that provide a relatively inexpensive and convenient method for producing ultra-high-density data storage devices. These devices can be manufactured by well-established and readily-available semiconductor processing technology and techniques. Further, some of the devices disclosed in the Gibson '596 patent are somewhat insensitive to emitter noise. Even fuxther, some devices are somewhat insensitive to variations in the gap distance between the emitters 350 and the storage medium 40 that may occur when the emitters 350 move relative to the storage medium 40.

Some of the reasons for these insensitivities are related to, for example, the nature of the diode devices disclosed in the Gibson '596 patent. In these devices, the diodes allow constant current sources to be connected to the emitters 350 and/or allow the current of the electron beam emitted by the emitters 350 to be monitored independently of the signal current generated from the interaction of a low-power-density beam and the storage areas. This allows the signal current described in the Gibson '596 patent to be normalized.

If the emitters 350 bombard the storage areas with electron beams of sufficient power density, the beams effectively write to the storage medium 40 and change the bombarded storage areas from unmodified areas 140 to modified areas 130. This writing occurs when electrons from the high-power-density-electron beams bombard the storage areas and cause the bombarded storage areas to experience changes of state. Such changes of state can render an amorphous storage area crystalline or can thermally damage a previously undamaged storage area.

The changes of state can be caused by the bombarding electrons themselves, specifically when collisions between the electrons and the media atoms re-arrange the atoms, but can also be caused by the high-power-density-electron beams transferring the energy of the electrons to the storage areas and causing localized heating. For phase changes between crystalline and amorphous states, if a rapid cooling process follows the heating, an amorphous state is achieved. Conversely, an amorphous state can be rendered crystalline by heating the bombarded storage areas enough to anneal them.

The writing process described above is preferable when the storage medium 40 chosen contains storage areas that can change between a crystalline and amorphous structure and where the change causes associated changes in the storage area's properties. For example, the process is preferable if the electrical properties, crystallography, secondary electron emission coefficient (SEEC) or backscattered electron coefficient (BEC) of the storage area can be altered. According to the devices disclosed in the Gibson '596 patent, these changes in material properties can be detected and allow for read operations to be performed, as will be discussed below, after several actual devices are presented.

In a device where a diode is used as the storage medium 40, high-power-density bombarding beams locally alter the state of the bombarded storage areas on the diode surface between crystalline and amorphous states. The fact that amorphous and crystalline materials have different electronic properties is relied upon to allow the performance of a read operation.

When writing to a storage medium 40 made up of a photodiode and a fluorescent material, the emitters 350 bombard and alter the state of regions of the fluorescent material with the high-power-density-electron beams. This bombardment locally alters the rates of radiative and non-radiative recombination and, thereby, locally alters the light-emitting properties of the bombarded regions of the fluorescent layer. This allows yet another approach, to be discussed below, for performing a read operation.

Once data bits have been written to the storage medium 40, a read process can retrieve the stored data. In comparison to the high-power-density-electron beams used in the write process, the read process utilizes lower-power-density-electron beams to bombard the storage regions on the storage medium 40. The lower-power-density-electron beams do not alter the state of the storage areas they bombard but instead either are altered by the storage medium 40 or generate signal currents therein. The amplitudes of these beam alterations or signal currents depend on the states of the storage areas (e.g., crystalline or amorphous) and change sharply dependent on whether the storage areas being bombarded are modified regions 130 or unmodified regions 140.

When performing a read operation on a storage medium 40 that has crystalline and amorphous storage areas, the signal current can take the form of a backscattered or secondary electron emission current collected by a detector. Since SEEC and BEC coefficients of amorphous and crystalline materials are, in general, different, the intensity of the current collected by the detector changes dependent on whether the lower-power-density-electron beam is bombarding a modified region 130 or an unmodified region 140. By monitoring this difference, a determination can be made concerning whether the bombarded storage area corresponds to a "1" or a "0" data bit.

When a diode is chosen as the storage medium 40, the signal current generated is made up of minority carriers that are formed when the lower-power-density electron beam bombards a storage area and excites electron-hole pairs. This type of signal current is specifically made up of those formed minority carriers that are capable of migrating across the interface of the diode and of being measured as a current. Since the number of minority carriers generated and capable of migrating across the diode interface can be strongly influenced by the crystal structure of the material, tracking the relative magnitude of the signal current as the beam bombards different storage areas allows for a determination to be made concerning whether the lower-power-density-electron beam is bombarding a modified region 130 or an unmodified region 140.

In the case of a photodiode and fluorescent material used as the storage medium 40, the lower-power-density electron beam used for reading stimulates photon emission from the fluorescent material. Dependent on whether the region bombarded is a modified region 130 (e.g., thermally altered) or an unmodified region 140, the number of photons stimulated in the fluorescent material and collected by the photodiode will be significantly different. This leads to a different amount of minority carriers generated in the photodiode by the stimulated photons and results in a difference in the magnitude of the signal current traveling across the photodiode interface as the beam bombards different storage areas.

In many of the embodiments described above, a bulk-erase operation is possible to reset all of the modified regions 130 present on the storage medium 40 after the writing process. For example, if an entire semiconductor storage medium 40 is properly heated and cooled, the entire storage medium 40 can be reset to its initial crystalline or amorphous structure, effectively erasing the written data bits. With regard to a photodiode storage medium 40, bulk thermal processing can reset thermally altered areas by processes such as annealing.

### Related Art: Atomic Force Microscopes (AFM)

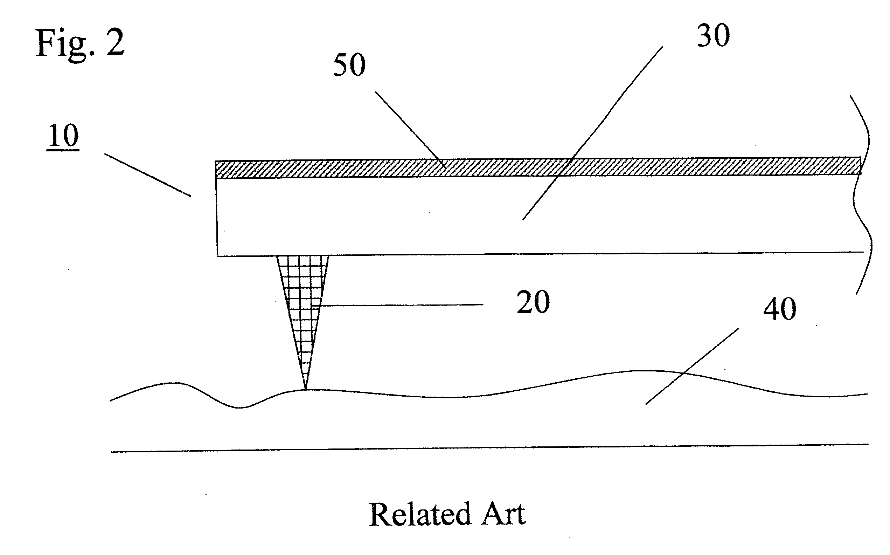

Fig. 2 illustrates a top view of a typical AFM probe 10 according to the related art that is made up of a tip 20, a compliant suspension 30 that supports the tip 20 and that itself is supported by other components of the AFM (not shown) and a piezoelectric material 50 deposited on the top surface of the compliant suspension 30.

The probe 10 can be operated in the contact, non-contact or tapping (intermittent contact) AFM modes. The contact mode allows for direct contact between the tip 20 and the storage medium 40 while the non-contact mode (not shown) keeps the tip 20 proximate to (generally on the order of or less than approximately 100 nanometers) the storage medium 40. The tapping mode allows the compliant suspension 30 to oscillate in a direction perpendicular to the surface of the storage medium 40 while the probe 10 moves in a direction parallel relative to the storage medium 40. Therefore, the tip 20 in the tapping mode contacts or nearly contacts the storage medium 40 on an intermittent basis and moves between positions that are in direct contact with and proximate to the storage medium 40.

The tip 20 is typically, although not exclusively, made from silicon or silicon compounds according to common semiconductor manufacturing techniques. Although the tip 20 is typically used to measure the dimensions of surface features on a substrate such as the storage medium 40 discussed above, the tip 20 can also be used to measure the electrical properties of the storage medium 40.

The tip 20 is affixed to a compliant suspension 30 that is sufficiently flexible to oscillate as required by the intermittent contact or tapping mode or as required to accommodate unwanted, non-parallel motion of the tip suspension with respect to the storage medium during scanning. In other words, the compliant suspension 30 keeps the tip in contact or at the appropriate working distance for the storage medium 40. The compliant suspension 30 typically holds the tip 20 at one end and is attached to and supported by the remainder of the AFM structure on the other end. Storage medium 40, in a typical AFM structure, rests on a platform that is moved with relation to the tip 20, allowing the tip 20 to scan across the storage medium 40 as the platform moves.

According to the embodiment illustrated in Fig. 2, the piezoelectric material 50 is deposited on the top surface of the compliant suspension 30. As the tip 20 moves across the storage medium 40, the tip 20 moves the compliant suspension 30 up and down according to the surface variations on the storage medium 40. This movement, in turn, causes either compression or stretching of the piezoelectric material 50 and causes a current to flow therein or causes a detectable voltage change. This voltage or current is monitored by a sensor (not shown) and is processed by other components of the AFM to produce images of the surface topography of the scanned area.

### Disadvantages of the related technology:

In order to effectively write to the storage medium 40, the emitters 350 disclosed in the Gibson '596 patent are often required to emit a great deal of energy and therefore experience extreme temperature conditions. These conditions limit the types of materials from which the emitters 350 can be manufactured and sometimes makes the emitters 350 economically undesirable.

In general, temperature increases will be the biggest problem. However, it is also possible that damage could be caused by things like electromigration. When a lot of thermal energy is needed to write to the storage medium 40, a large current is also needed. However, larger currents imply larger fields in the material of the emitters 350, which can lead to electromigration.

Further, depending on the storage medium 40 that is used, no materials may be available to manufacture emitters that are capable of withstanding the conditions associated with channeling sufficient energy to change the state of the storage medium from one phase to another (e.g., from crystalline to amorphous).

The present invention seeks to provide improved storage and retrieval of data.

According to an aspect of the present invention there is provided a method of storing and retrieving data as specified in claim 1.

According to another aspect of the present invention, there is provided a system for storing and retrieving data including a storage medium having a nanometer-scaled storage area; means for reading from the storage medium by locally energizing the storage medium; and means for writing to the storage medium by providing energy to a widespread region of the storage medium.

The preferred embodiments can provide devices and methods that allow for writing to and reading from a storage medium but that do not require that high-power density beams be channeled through the emitters.

They can also provide methods and devices for reading and writing to storage media that include materials with extremely high melting temperatures and/or transition temperatures between various states.

Certain embodiments of the present invention provide for methods and devices that alleviate the need for high-power-density beams to be produced, channeled, and emitted in order to effectively write nanometer-scaled data bits to a storage medium.

Certain embodiments of the present invention provide methods and devices that allow for writing nanometer-scaled data bits to storage media that possess high melting temperatures and/or high transition temperatures between states such as the crystalline and amorphous states.

Certain embodiments of the present invention provide methods and devices for nanometer-scaled data storage that allow for more economical materials to be used to manufacture components for reading from and writing to a storage medium.

Certain embodiments of the present invention allow for materials with better electronic properties to be used to manufacture components for reading from and writing to a storage medium.

An embodiment of the present invention is described below, by way of example only, with reference to the accompanying drawings, in which:
Fig. 1 illustrates an ARS device according to the related art.
Fig. 2 illustrates a side view of a typical AFM probe configuration according to the related art.
Fig. 3 illustrates a side view of a memory storage device with a resistive element present in or attached to the storage medium of the device.
Fig. 4 illustrates a side view of a memory storage device with a heat source present above the storage medium of the device.
Fig. 5 illustrates a side view of a memory storage device with a light source present above the storage medium of the device.

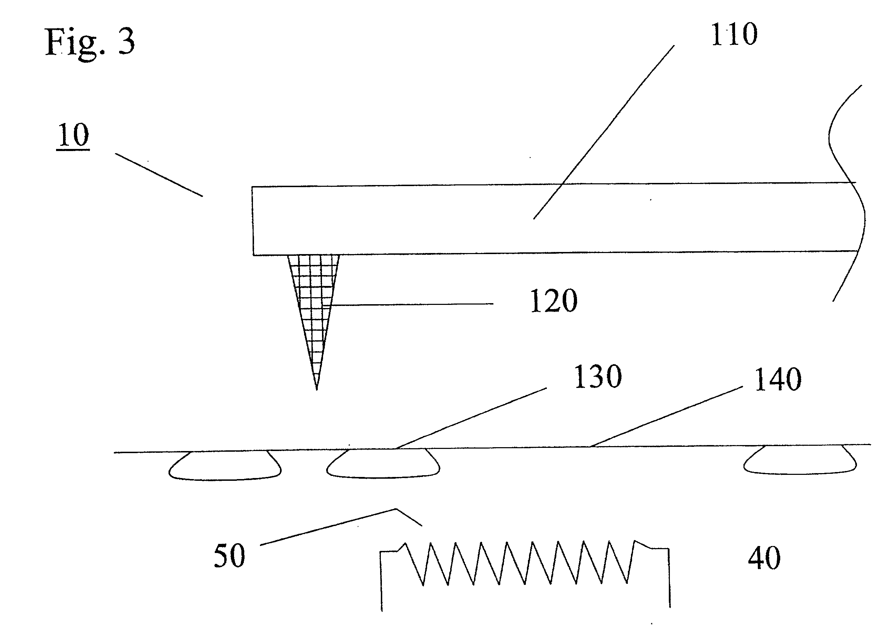

Fig. 3 illustrates a probe 10 according to certain embodiments of the present invention. The probe 10 includes a support 110 and a tip 120 attached to the support. The probe is positioned above a storage medium 40 that includes modified storage areas 130, unmodified storage areas 140 and a resistive element 50. The tip 120 functions as a primary energy source while the resistive element 50 functions as a secondary energy source.

The support 110 can be supported by any of the devices discussed above that support either the tips 20 or emitters 350. In addition, the support 110 can include any other support structure that allows the support 110 to position the tip 120 at a desired position with relation to the substrate 40. A method must exist, however, for enough energy to be provided to the tip 120 to allow the tip 120 to read from the storage medium 40 as discussed above with relation to the emitter 350. Additional energy to write to the storage medium 40 can be provided by a secondary energy source, as will be discussed below.

If the device supporting the support 110 is analogous to the emitter array support 360, the emitter array support 360 is not restricted in the number of supports 110 or tips 120 that can be affixed thereto and does not have a limited range of motion relative to the storage medium 40.

According to certain embodiments, the support 110 provides energy that can be channeled through the tip 120. This energy can be electrical, thermal, optical or any other type of energy that can be channeled from the tip 120 to the storage medium 40. During the write operation, the energy channeled through the tip 120 is of sufficient power density to convert an unmodified storage area 140 into a modified storage area 130. The energy can be conducted to any or all of the supports 110 via single- or multiple-wire connections to each support 110.

The tip 120 can include any of the tip 20 or emitter 350 embodiments discussed above. The tip 120 can also include any other device(s) that allow(s) enough energy to be emitted from the tip 120 to write to and read from the storage media 40. In other words, the tip 120 can, among other things, be the tip of an emitter 350 or can be an AFM tip operating in either a contact, non-contact or intermittent mode. The support 110 and tip 120 can be made from silicon, silicon alloys or other materials that, for example, avail themselves to being manufactured by standard semiconductor processing techniques.

The tips 120 can take on many geometries. For example, any tip geometries disclosed in U.S. Patent No. 5,936,243 to Gibson et al. (Gibson '243), the contents of which are incorporated herein in their entirety, or that are capable of performing the reading and writing operations are within the scope of certain embodiments of the present invention.

The storage medium 40 can include any of the components or features of the storage media 40 discussed above. For example, the storage medium 40 can be a semiconductor, a diode or a fluorescent material and photodiode combination. In addition, the storage medium 40 can be any material or device to which nanometer-scaled data bits can be written to and read from. The modified and unmodified storage areas 130, 140 discussed above can be located at or below the surface of the storage medium 40.

Resistive element 50 can be any material that can be heated to an elevated temperature. Preferably, the temperature of the resistive element 50 remains below the melting temperature of the storage medium 40. However, elevating the temperature of the resistive element to a point near the melting point of the storage medium 40 is sometimes desirable.

Electrical, magnetic or other means of heating the resistive element 50 are within the scope of certain embodiments of the present invention. The resistive element 50 is usually capable of thermally influencing the entire region of the storage medium 40 wherein modified regions 130 are present.

The resistive element 50 can be located in a region adjacent to the surface of the storage medium 40 yet substantially below the depth of the modified storage areas 130. According to certain embodiments of the present invention, the resistive element 50 is located on the surface of the semiconductor wafer, diode or photodiode that is being written to or read from.

In operation, the tip 120 illustrated in Fig. 3 emits an energy beam onto the storage areas (localized regions) of storage medium 40. This beam is generally of low intensity and can, according to certain embodiments of the present invention, write to and read from the storage medium 40.

Although this beam, by itself, cannot convert an unmodified storage area 140 to a modified storage area 130, turning on the resistive element 50 heats the storage medium 40 over a widespread region (e.g., over several storage areas or over even over the entire storage medium 40) during the writing operation and the conversion is facilitated. In effect, the resistive element 50 provides supplemental energy such that the relatively low-power-density beam emitted from the tip 120, when added to the energy from the resistive element 50, provides the total energy necessary to turn a heated region of the storage medium 40 to a converted region.

When the storage medium 40 is written to by amorphizing storage area material or by changing the material to a lower temperature crystalline phase, the resistive element 50 is turned on (emits energy), the tip 120 emits an energy beam and the region of the storage medium 40 bombarded by the beam melts. Therefore, the tip 120 constitutes a primary energy source and, when used with a secondary energy source, can alter an area of storage medium 40. Primary energy sources include devices capable of transferring energy exclusively to a localized, nanometer-scaled region of the storage medium 40. Primary energy sources are typically positioned immediately above the nanometer-scaled region to which they transfer energy. They can be in direct contact with'the region or can be proximate to the region.

Secondary energy sources include any device capable of transferring energy to a localized (nanometer-scaled), intermediate (micron-scaled or millimeter-scaled) or large (greater than millimeter-scaled and/or consisting of a substantial portion of the storage medium 40) such that the energy provided by the primary and secondary sources, when taken together, can convert an unmodified storage area 140 to a modified storage area 130. Secondary sources are typically positioned close to the storage medium, meaning that they are at a location where they can transfer enough energy to the nanometer-scaled region over which the primary energy source is located to significantly lower the amount of energy needed for the primary energy source to transform the unmodified storage area 140 to a modified storage area 130. Additional examples of primary and secondary energy sources are provided below.

Once the beam is removed, the melted storage area can then be cooled under controlled thermal conditions to achieve either a single crystalline phase, one of a plurality of possible crystalline phases (if the material that makes up the storage area has several possible crystalline phases) or amorphous phase. When writing by transforming storage area material from an amorphous to a crystalline state or from a lower-temperature crystalline phase to another, higher-temperature crystalline phase, some embodiments of the present invention require only annealing.

If the storage medium 40 is a photodiode covered by a fluorescent material, the resistive element 50 elevates the temperature of the storage medium toward the threshold temperature at which thermal damage or a phase change occurs in the fluorescent material. This enables a small additional thermal stimulation, such as one that would be created under a thermal or electron beam emitted from tip 120, to effectuate the phase change or to thermally damage a storage area of the storage medium 40.

Although melting is one method of transforming an unmodified region 140 to a modified region 130, as discussed above, other transformation methods exist. For example, unmodified regions 140 can be defined as non-thermally-damaged regions and thermal damage can be necessary to write to the storage medium 40. In that case, the resistive element 50 produces enough energy to raise the storage medium 40 temperature such that only a small additional amount of energy is needed to allow the onset of thermal damage.

According to certain embodiments of the present invention, while performing a read operation, the resistive element 50 is turned off, allowing the overall storage medium 40 to cool. Because the storage medium 40 is now exposed to less total energy, the surface of the storage medium 40 bombarded by the energy beam does not undergo a change of state but does produce a measurable signal. This allows the tip 120 to perform a read operation without having to change the energy density of the emitted beam.

In other words, the tip 120 emits enough additional energy to generate a signal current from the storage medium 40 when the resistive element 50 is not heating the storage medium 40 and provides enough energy to melt or thermally influence the storage medium 40, effecting a phase change, when used in conjunction with the resistive element 50 that heats the storage medium 40.

The distance separating the tip 120 and the storage medium 40 can be analogous to the distance separating the emitters 350 from the storage medium 40 in Fig. 1. The distance can also be chosen to correspond to typical distances for AFM probe tips in either the non-contact, contact or tapping mode.

In embodiments of the present invention where the tip 120 is in direct contact with the storage medium 40, it is sometimes preferable to form the tip 120 at least partially from a wear-resistant material or from a material that will reduce the wear on the storage medium 40. Further, it may be beneficial, according to certain embodiments of the present invention, to deposit a protective layer (not shown) on the surface of the storage medium 40 in order to prevent the tip 120 from directly contacting a melted storage area or from damaging the storage medium 40. In order to protect the tip 120, the protective layer is generally chosen such that it has a higher melting temperature than the storage medium 40. The protective layer also can prevent topographical changes due to material flow upon melting.

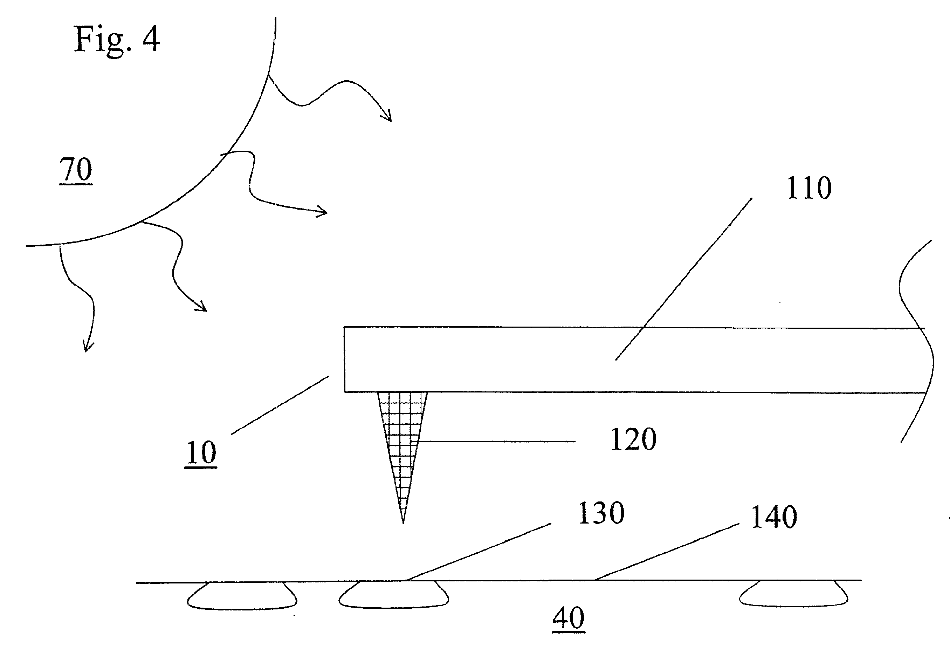

Fig. 4 illustrates embodiments of the present invention wherein the tip 120, or primary energy source, emits an energy beam that can include light or electrons and where the resistive element 50 (the secondary energy source) is replaced by a light source 70 (another secondary energy source) that illuminates the surface of the storage medium 40. In this case, the light source 70 irradiates the surface of storage medium 40. However, the energy from the light source 70 is insufficient to change the state of the irradiated storage areas.

In addition to the light source 70 energy, the tip 120 also emits energy (typically in the form of an electron beam) onto the storage medium 40. This allows the tip 120 to write to the storage medium 40 when light source 70 is turned on. However, as with the embodiments illustrated in Fig. 3, the tip 120 only reads from the storage medium 40 when the supplemental energy source affecting the storage medium 40 is turned off.

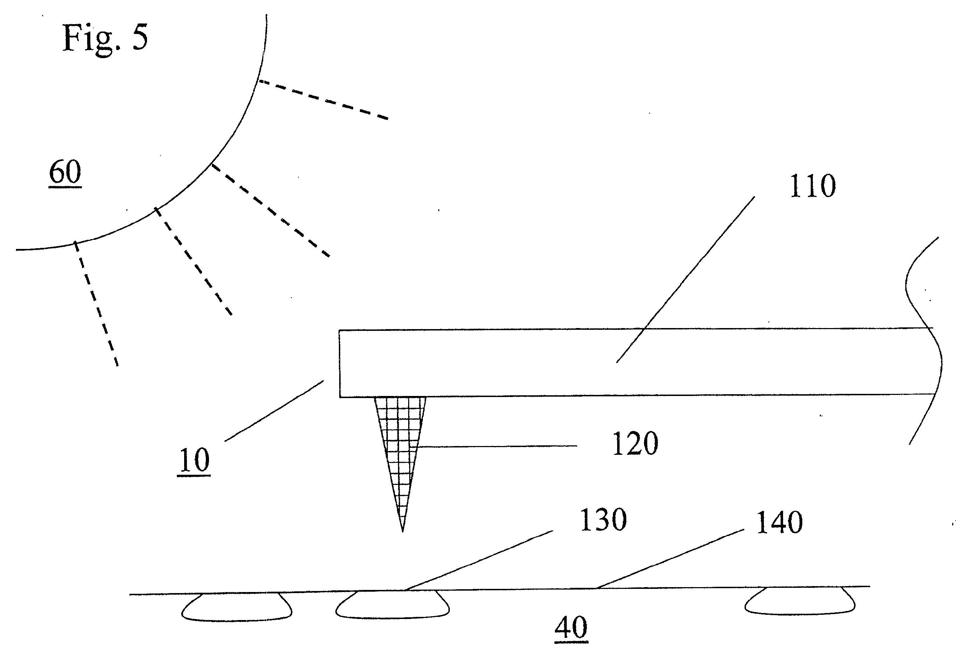

Fig. 5 illustrates yet other embodiments of the present invention wherein the resistive element 50 (or light source 70) is replaced by a heat source 60 that functions as the secondary energy source. The heat source 60 is positioned at a location removed from the storage medium 40. The heat source 60 can be a simple infrared heat lamp or any other device capable of supplying energy to the storage medium 40 in the form of heat.

Much as the electron- and light-based devices discussed above, the heat-based device illustrated in Fig. 5 allows the heat source 60 to supplement the heat provided to the surface of the storage medium 40 from the tip 120. This allows the state of the storage areas bombarded by the energy beam emitted by the tip 120 to be changed. As with the other devices, when reading from the storage medium 40, the heat source 60 is preferably turned off.

The embodiments of the present invention illustrated in Figs. 4 and 5 do not require that any devices (e.g., resistive elements 50) be in direct contact with the storage medium 40. This allows the energy source to be positioned above the storage medium 40, if desired, and materials, structures or devices with relatively low melting temperatures to be positioned below the surface of the storage medium 40. Hence, the materials, structures and devices are afforded some protection from the energy radiated by the heat source 60 or radiative light source 70. In contrast, the devices illustrated in Fig. 3 make it more efficient to heat the storage medium 40 because, in general, less energy is lost between the supplemental energy source when conducting than when radiating the energy. Hence, the choice of whether to influence the storage medium 40 via a radiative heat source 60, a radiative light source 70 or a conductive resistive element 50 can depend on such factors as the operating temperatures of the components in the data-storage device and energy conservation factors.

According to certain embodiments of the present invention, all of the tip configurations discussed above are compatible with all of the storage media 40 discussed above and all of the methods/devices used to provide energy to the storage medium 40 beyond the energy provided by the tips. Also, any of the energy types discussed above are compatible with any device configuration within the scope of embodiments of the present invention.

Although the above embodiments are representative of portions of the present invention, other embodiments of the present invention will be apparent to those skilled in the art from a consideration of this specification or practice of the present invention disclosed herein. It is intended that the specification and examples and figures be considered as exemplary only, with the present invention being defined by the claims and their equivalents.

The disclosures in United States patent application No. 09/984,378, from which this application claims priority, and in the abstract accompanying this application are incorporated herein by reference.

## Claims

1. A method of storing and retrieving data including the steps of:
providing a storage medium (40) having a nanometer-scaled storage area;
reading from the storage medium (40) by locally energizing the storage medium (40); and
writing to the storage medium (40) by providing energy to a widespread region of the storage medium (40).

2. A method as in claim 1, wherein the providing step includes providing at least one of a semiconductor, a diode and a photodiode with a fluorescent material.

3. A method as in claim 1 or 2, wherein the writing step includes using at least one of a resistive element (50), a light source (70) and a heat source (60) to provide the energy.

4. A method as in claim 3, wherein the writing step includes providing a heat lamp as the heat source (60).

5. A method as in claim 3, wherein the writing step includes providing a resistive element (50) in direct contact with the storage medium (40).

6. A method as in any preceding claim, wherein the writing step includes providing a silicon primary energy source (120).

7. A method as in any preceding claim, wherein the writing step includes locally energizing a single storage area (130, 140).

8. A method as in any preceding claim, wherein the reading step includes providing a primary energy source (120) in proximity to the storage medium (40).

9. A method as in claim 8, wherein the reading step includes providing a primary energy source (120) in direct contact with the storage medium (40).

10. A method as in any preceding claim, wherein the writing step includes changing a storage area (130, 140) from an unmodified storage are (140) to a modified storage area (130).
